# EUROPÄISCHE PATENTSCHRIFT

(11) **EP 2 054 845 B1**
(45) Veröffentlichungstag und Bekanntmachung des Hinweises auf die Patenterteilung: **20.01.2010**
(21) Anmeldenummer: 07801638.3
(22) Anmeldetag: 13.08.2007
(51) Int. Cl.: G06K 19/06

(54) **KARTENFÖRMIGER DATENTRÄGER UND VERFAHREN ZUM AUFZEICHNEN VON INFORMATION AUF EINEN DERARTIGEN DATENTRÄGER**
CARD-LIKE DATA STORAGE MEDIUM, AND METHOD FOR RECORDING INFORMATION ON SUCH A DATA STORAGE MEDIUM
SUPPORT DE DONNÉES EN FORME DE CARTE ET PROCÉDÉ D'ENREGISTREMENT D'UNE INFORMATION SUR UN SUPPORT DE DONNÉES DE CE TYPE

(30) Priorität: 14.08.2006 EP 06016931
(43) Veröffentlichungstag der Anmeldung: 06.05.2009
(73) Patentinhaber: Maurer Electronics Gmbh, 80992 München (DE)
(72) Erfinder: FAST, Peter, 86923 Finning/Entraching (DE)
(74) Vertreter: Wagner, Bernhard Peter
(86) Internationale Anmeldenummer: PCT/EP2007/007154
(87) Internationale Veröffentlichungsnummer: WO 2008/019816

(56) Entgegenhaltungen:
- US-A- 2 950 194
- US-A- 4 863 819
- US-A- 4 957 580

## Beschreibung

Die Erfindung betrifft einen kartenförmiger Datenträger und ein Verfahren zum Aufzeichnen von Information auf einen derartigen Datenträger.

Ein bekannter Daten- oder Aufzeichnungsträger für Bildinformationen (EP 0 537 484 A1), der insbesondere als Wert- oder Ausweiskarte verwendet wird, besteht aus einem als lichtstreuender Hintergrund wirkenden Karteninlett und einer darauf angeordneten transparenten Folie, auf der eine farbaufnehmende Schicht angeordnet ist. Die transparente Folie dient als Substrat, in das optisch erkennbare Information durch Karbonisieren oder Schwärzen des Folienmaterials mit Hilfe von Laserstrahlung eingeschrieben werden kann. Die farbaufnehmende Schicht kann durch Auftragen oder Einbringen von Farbstoffen farbig bedruckt werden.

Zur Erhöhung der Fälschungssicherheit derartiger Daten- oder Aufzeichnungsträger werden eine Vielzahl von Merkmalen eingesetzt, die aus dem Wertpapierdruck bekannt sind, wie z. B. Guillochen und dergleichen, aber es werden auch andere für derartige Datenträger spezifische Sicherheitsmerkmale verwendet, wie z. B. so genannte Kippbilder, bei denen zwei sich ergänzende Informationen durch ein Linsenraster hindurch in einen Aufzeichnungsbereich des Datenträgers eingeschrieben werden, so dass diese Informationen je nach Betrachtungswinkel wahlweise erkennbar sind. Derartige Datenträger sind in der EP 0 216 947 B1 und der EP 0 219 012 A2 beschrieben. Obwohl derartige Kippbilder relativ schwer zu fälschen sind, besteht weiterhin das Bedürfnis, die Fälschungssicherheit von Datenträgern, insbesondere von Wert- und Ausweiskarten zu erhöhen.

Die US 2,950,194, das den Stand der Technik darstellt, betrifft ein Material für den Gebrauch in einem fotographischen Reproduktionssystem, das aus einem Träger und einem Aufzeichnungsmaterial besteht, das eine fotolytische Substanz enthält. Nach Belichten des fotoempfindlichen Materials durch ein Negativ hindurch wird das Aufzeichnungsmaterial entwickelt, wobei kleine Hohlräume oder Bläschen entstehen, die in jedem belichteten Bildpunkt gleichmäßig über die gesamte Dicke des Aufzeichnungsmaterials verteilt sind. Der Träger dient dabei als Kontrastschicht.

Die US 4,863,819 beschreibt eine optische Datenkarte, die nur lesbar ist und die eine ebene Basisschicht aus Kunststoff, beispielsweise Polycarbonat, aufweist, auf der ein Streifen aus Aufzeichnungsmaterial vorgesehen ist. Um Datenpunkte in einer Schicht auszubilden, die sandwichartig zwischen der Basisschicht und einer ebenen transparenten schützenden Deckschicht angeordnet ist, wird die fotoempfindlichen Schicht belichtet und entwickelt, wobei kleine Bläschen als Lichtstreuzentren in den Datenpunkten gebildet werden.

Die US 4,957,580 beschreibt ein Verfahren zum Herstellen einer optischen Datenkarte, bei der die aufzuzeichnende Information mittels eines gewöhnlichen silberbasierten Fotoprozesses auf die Karte aufgebracht wird.

Der Erfindung liegt demzufolge die Aufgabe zugrunde, einen weiteren kartenförmigen Datenträger sowie ein Verfahren zum Aufzeichnen von Information auf einen derartigen Datenträger zu schaffen, der eine erhöhte Fälschungssicherheit besitzt.

Diese Aufgabe wird durch den Datenträger nach Anspruch 1 und das Verfahren nach Anspruch 9 gelöst. Vorteilhafte Ausgestaltungen und Weiterbildungen der Erfindung sind in den jeweiligen Unteransprüchen beschrieben.

Um eine fälschungssichere Aufzeichnung von Informationen zu erhalten, sind in einer transparenten Deckschicht des kartenförmigen Datenträgers Lichtstreuzentren entsprechend darzustellender Information vorgesehen, die als kleine Hohlräume oder Bläschen ausgebildet sind. Die Lichtstreuzentren sind dabei entsprechend der von diesen darzustellenden Information für eine dreidimensionale Darstellung in Dickenrichtung der Deckschicht gegeneinander versetzt.

Durch die Verwendung von kleinen Hohlräumen oder Bläschen als Streuzentren, die in Dickenrichtung der Deckschicht gegeneinander versetzt sind, zur Darstellung der Information in dreidimensionaler Form erscheint diese für den Betrachter in der Deckschicht ähnlich wie ein Wasserzeichen und nicht wie darauf oder darunter gedruckt. Die Lichtstreuzentren bilden dabei kleine transparente Bereiche, deren Brechungsindex von dem der Deckschicht verschieden ist. Unter Deckschicht ist hier jede selbstragende oder auf einem Substrat angeordnete, ein- oder mehrlagige Schicht eines kartenförmigen Datenträgers zu verstehen, die dem Betrachter auf der Vorder- oder Rückseite des Datenträgers zu gewandt ist.

Besonders bevorzugt ist es, wenn die kleinen Hohlräumen oder Bläschen einen Durchmesser aufweisen, der im Bereich von 0.25 mm bis 0,03 mm liegt. Die Lichtstreuzentren, also die kleinen Hohlräume oder Bläschen können alle den gleichen Durchmesser besitzen. Gemäß einer vorteilhaften Ausgestaltung der Erfindung weisen sie jedoch unterschiedliche Durchmesser entsprechend der von ihnen darzustellenden Information auf.

Um die Erkennbarkeit der aufgezeichneten Information für den Betrachter zu verbessern, ist es zweckmäßig, wenn der Fläche der Deckschicht, die von der Betrachtungsseite der Deckschicht abgewandt ist, eine Kontrastschicht zugeordnet ist. Die Kontrastschicht kann dabei eine diffus reflektierende Schicht oder eine lichtabsorbierende Schicht sein, je nachdem ob die dargestellte Information dunkel vor einem hellen Hintergrund oder hell vor einem dunklen erscheinen soll.

Grundsätzlich ist es denkbar, dass die transparente Deckschicht als selbsttragende Schicht im Wesentlichen den Datenträger bildet, auf dem auch weitere Informationen aufgedruckt und/oder eingeprägt sind. Ist die Deckschicht jedoch auf einem Substrat angeordnet, so ist es vorteilhaft, wenn die Kontrastschicht von dem Substrat gebildet ist.

Bei einer besonders vorteilhaften Ausgestaltung der Erfindung ist vorgesehen, dass eine Anzahl der Lichtstreuzentren in der Deckschicht sich bis in eine den Aufzeichnungsbereich für Information tragende Schicht erstrecken. Hierdurch lässt sich eine Verschweißung zwischen der Deckschicht und der den Aufzeichnungsbereich für Information tragenden Schicht, also dem Substrat herstellen, die die Fälschungssicherheit des erfindungsgemäßen Datenträgers weiter erhöht, da die Darstellung der in der Deckschicht und teilweise im Substrat aufgezeichneten Information zerstört wird, wenn die Deckschicht von dem Substrat, also von der den Aufzeichnungsbereich für Information tragenden Schicht, abgelöst werden sollte, um den Datenträger zu verfälschen. Die Fälschungssicherheit wird also dadurch erhöht, dass aufgrund der Ausbildung von Lichtstreuzentren im Grenzbereich der Deckschicht erkannt werden kann, ob die Deckfolie vom Substrat abgenommen und anschließend wieder aufgebracht wurde.

Ferner ist es möglich, zusätzlich zu den Lichtstreuzentren in der Deckschicht in oder auf einer den Aufzeichnungsbereich für Information tragenden Schicht Bildpunkte vorzusehen, die gemeinsam mit den Lichtstreuzentren in der Deckschicht eine Gesamtinformation darstellen. Auch hierdurch lässt sich die Fälschungssicherheit des erfindungsgemäßen Datenträgers weiter verbessern, da die Darstellung von Information durch Lichtstreuzentren in der Deckschicht und Bildpunkte in oder auf dem Substrat beim Trennen von Deckschicht und Substrat irreversibel zerstört wird.

Zweckmäßiger Weise ist die Deckschicht aus Polycarbonat hergestellt.

Ein besonders vorteilhaftes Verfahren zum Aufzeichnen von Information auf einen erfindungsgemäßen Datenträger zeichnet sich dadurch aus, dass in einem Aufzeichnungsbereich in der Deckschicht kleine Hohlräume oder Bläschen, deren Durchmesser insbesondere im Bereich von 0,25 mm bis 0,03 mm liegt, als Lichtstreuzentren entsprechend darzustellender Information mittels Strahlung, insbesondere mittels Licht, vorzugsweise mittels Laserstrahlung erzeugt werden, wobei die Lichtstreuzentren zusätzlich entsprechend der von ihnen darzustellenden Information für eine dreidimensionale Darstellung in Dickenrichtung in der Deckschicht gegeneinander versetzt ausgebildet werden. Durch die Verwendung von Strahlung, insbesondere Licht, vorzugsweise Laserstrahlung, lassen sich die Lichtstreuzentren in der Deckschicht entsprechend der darzustellenden Information mit sehr großer Genauigkeit und damit mit hoher Auflösung ausbilden, was unerlaubtes Kopieren der aufgezeichneten Information zumindest wesentlich erschwert, wenn nicht gar unmöglich macht. Die dreidimensionale Darstellung von Information in der Deckschicht erschwert das unerlaubte Kopieren zusätzlich.

Der Brechungsindex der Deckschicht wird also zur Bildung der Lichtstreuzentren, die der aufzuzeichnenden Information entsprechen, durch Strahlung verändert, wobei kleine Hohlräume oder Bläschen als transparente Bereiche gebildet werden, deren Brechungsindex von dem der Deckschicht verschieden ist.

Hohlräume oder Bläschen in der transparenten Deckschicht haben den Vorteil, dass sie einfach durch eine Art "Aufkochen" des Deckschichtmaterials gebildet werden können, wobei sich die Größe der Bläschen durch die jeweils punktgenau zugeführte Strahlungsenergie einstellen lässt.

Grundsätzlich kann die aufzuzeichnende Information mit kleinen Hohlräumen oder Bläschen gleicher Größe dargestellt werden, bevorzugt ist es jedoch, dass die Lichtstreuzentren entsprechend der von diesen darzustellenden Information mit unterschiedlichen Durchmesser hergestellt werden,

Ferner ist es möglich, dass eine Anzahl der Lichtstreuzentren so im Bereich einer inneren Oberfläche der Deckschicht mittels Strahlung erzeugt werden, dass sich diese Lichtstreuzentren bis in eine den Aufzeichnungsbereich für Information tragende Schicht erstrecken. Die Ausbildung der Lichtstreuzentren im Grenzbereich zwischen der Deckschicht und der den Aufzeichnungsbereich für Information tragenden Schicht, also z. B. dem Substrat, führt zu einer Verschweißung von Deckschicht und Substrat, die einerseits ein zerstörungsfreies Abtrennen der Deckschicht vom Substrat verhindert und die andererseits, falls trotzdem ein zerstörungsfreies Abtrennen gelingen sollte, zumindest zu einer Zerstörung der dargestellten Information führt, so dass festgestellt werden kann, ob die Deckschicht des kartenförmigen Datenträgers zum Verfälschen derselben abgetrennt wurde.

Eine andere Weiterbildung der Erfindung zeichnet sich dadurch aus, dass zusätzlich zu den Lichtstreuzentren in der Deckschicht in oder auf einer den Aufzeichnungsbereich für Information tragenden Schicht mittels Strahlung, insbesondere mittels Licht, vorzugsweise mittels Laserstrahlung, Bildpunkte erzeugt werden, die gemeinsam mit den Lichtstreuzentren in der Deckschicht eine Gesamtinformation darstellen.

Ein besonders zweckmäßiges Material für die Deckschicht stellt Polycarbonat (PC) dar, da in diesem Material Hohlräume oder Bläschen mittels Laserstrahlung besonders gut herzustellen sind.

Die Erfindung wird im Folgenden beispielsweise anhand der Zeichnung näher erläutert. Es zeigen:
Fig. 1 eine schematische vergrößerte Schnittansicht eines erfindungsgemäßen Datenträgers.
Fig. 2 eine Darstellung ähnlich Fig. 1 zur Erläuterung des erfindungsgemäßen Verfahrens, und
Fig. 3 eine schematische, vergrößerte Schnittansicht eines Datenträgers gemäß einer anderen Ausgestaltung der Erfindung.

In den Figuren der Zeichnung sind einander entsprechende Elemente mit gleichen Bezugszeichen versehen.

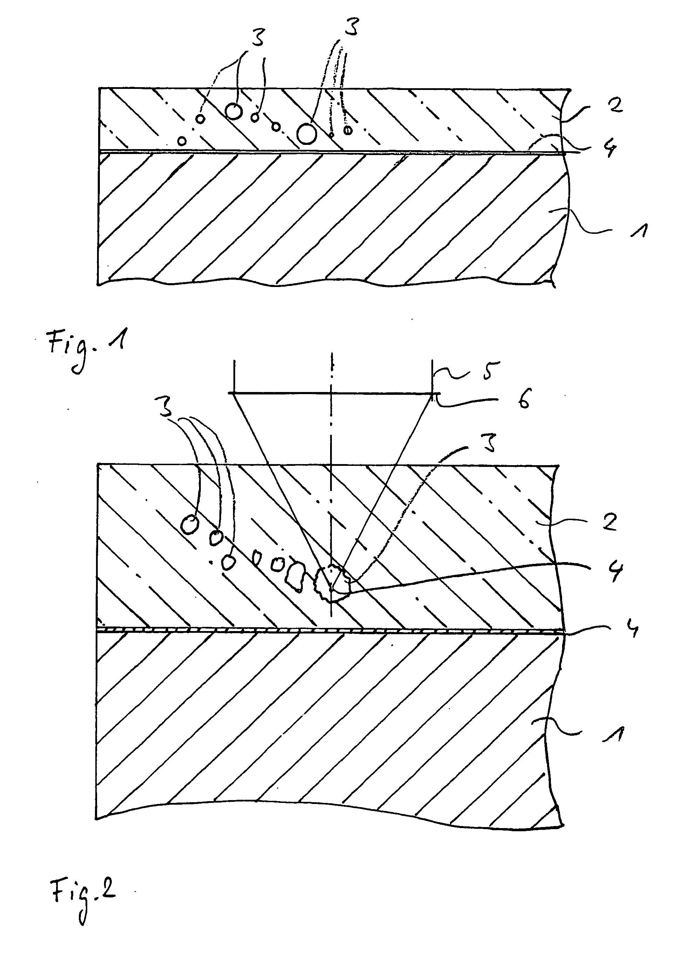

Wie in Fig. 1 dargestellt ist, weist ein kartenförmiger Datenträger ein Substrat 1 auf, auf dem eine Deckschicht 2 aufgebracht ist. In der Deckschicht 2 sind Lichtstreuzentren 3 vorgesehen, die entsprechend von darzustellender Information angeordnet sind. Die Lichtstreuzentren 3 stellen in der nicht näher gezeigten Draufsicht des Datenträgers Bild-, Schrift- oder andere Musterinformation dar, die vorzugsweise eine dreidimensionalen Eindruck bewirkt, da wie in Fig. 1 zu erkennen ist, die Lichtstreuzentren 3 in Dickenrichtung der Deckschicht 2 unterschiedlich tief in dieser angeordnet sind.

Die Lichtstreuzentren 3 werden durch kleine Hohlräume oder Bläschen ausgebildet, deren Brechungsindex sich von dem der Deckschicht 2 unterscheidet.

Die einzelnen Lichtstreuzentren, also die kleinen Hohlräume oder Bläschen 3 besitzen je nach der darzustellenden Information unterschiedliche Durchmesser, obwohl es auch denkbar ist, die Bläschen 3 mit gleichen Durchmessern herzustellen, und den Informationsgehalt durch Variation der Bläschendichte, also der Anzahl der Bläschen pro Längen- oder Flächeneinheit zu variieren.

Auf der von der Betrachterseite abgewandten Fläche der Deckschicht ist eine Kontrastschicht 4 vorgesehen, die im dargestellten Ausführungsbeispiel eine Zwischenschicht zwischen der Deckschicht 2 und dem Substrat 1 darstellt. Anstelle einer gesonderten Kontrastschicht ist es auch möglich, das Substrat 1 bzw. seine mit der Deckschicht in Kontakt stehende Oberfläche als Kontrastschicht auszubilden. Die Kontrastschicht 4 kann entweder eine diffus reflektierende Schicht oder eine lichtabsorbierende Schicht sein, je nach dem, ob sie Information im Hell-/Dunkel- oder Dunkel-/Hellkontrast dargestellt werden soll.

Obwohl in der Zeichnung die Deckschicht 2 als eine von einem Substrat 1 getragene Schicht dargestellt ist, ist es auch denkbar, die Deckschicht 2 als selbsttragende Schicht auszubilden, die auf ihrer Rückseite dann die Kontrastschicht 4 trägt. Die Deckschicht 2 kann eine homogene Schicht sein, es ist aber auch denkbar, sie aus mehreren Schichten aufzubauen.

Der erfindungsgemäße Datenträger kann in nicht näher dargestellter Weise durch Bedrucken, Lasergravieren oder dergleichen mit zusätzlicher Information und/oder Sicherheitsmerkmalen versehen sein.

Wie in Fig. 2 gezeigt ist, werden die einzelnen Lichtstreuzentren mit Hilfe von Strahlung, insbesondere mit Hilfe von Licht, vorzugsweise mittels Laserstrahlung ausgebildet. Hierzu wird ein Laserstrahl 5 mit Hilfe einer entsprechenden Optik 6 in die Deckschicht 2 fokussiert, und zwar in der Weise, dass der Brennpunkt 7 des Laserstrahls an dem Ort liegt, an dem das gewünschte Lichtstreuzentrum, also im dargestellten Ausführungsbeispiel das Bläschen 3 als Lichtstreuzentrum ausgebildet werden soll. Bläschen lassen besonders einfach durch eine Art "Aufkochen" des Schichtmaterials, insbesondere von PC erzeugen. Es ist aber auch möglich Lichtstreuzentren z. B. durch eine Licht induzierte Reaktion im Schichtmaterial auszubilden.

Die unterschiedliche Größe der einzelnen Bläschen, die in der Deckschicht vorzugsweise durch das "Aufkochen" des Deckschichtmaterials gebildet werden, wird über die jeweilige Energie des Laserlichtimpulses gesteuert. Die Tiefe der Bläschen, also ihr Abstand von der Betrachtungsoberfläche wird durch die Lage des Brennpunkts des Laserstrahls 5 eingestellt, wobei vorgesehen sein kann, dass zunächst entsprechend der darzustellenden Information die am tiefsten in der Deckschicht liegenden Bläschen oder Lichtstreuzentren gebildet werden, um dann in einem zweiten und nachfolgenden weiteren Durchgängen die näher an der Oberfläche liegenden Bläschen herzustellen. Es ist aber auch möglich, sämtliche Punkte der darzustellenden Information in einem Durchgang auszubilden, wobei die Fokuslage und die Energie des Laserstrahls 5 für jeden Bildpunkt, also für jedes Bläschen 3 einzustellen.

Eine Informationsdarstellung, beispielsweise ein Bild, z. B. ein Portraitfoto des Karteninhabers, Schriftinformation oder andere Muster insbesondere in dreidimensionaler Weise, die zusätzlich zu der üblichen gedruckten oder gravierten Informations- und Musterdarstellung in der erfindungsgemäßen Weise in eine transparente Deckschicht eines Datenträgers eingeschrieben ist, lässt sich durch einfaches Kopieren nicht in der Weise imitieren, dass es von einen auch nur ein wenig aufmerksamen Betrachter nicht erkannt werden würde.

Der erfindungsgemäße Datenträger weist somit eine erhöhte Fälschungssicherheit auf, da die als zusätzliches Sicherheitsmerkmal gedachte Darstellung von Information mittels Lichtstreuzentren in einer transparenten Schicht nur schwierig oder gar nicht kopiert werden kann.

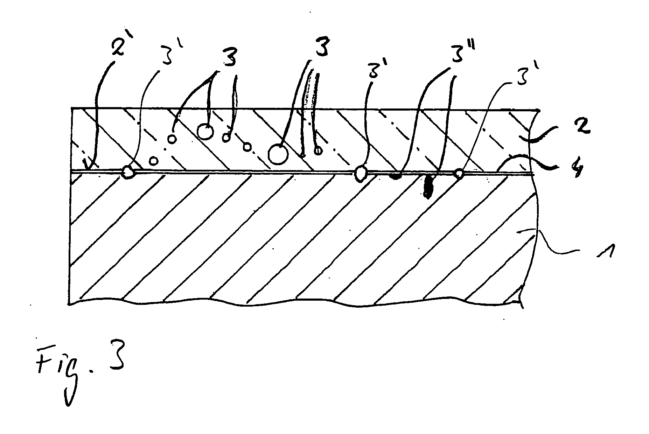

Gemäß einer anderen Ausgestaltung der Erfindung kann, wie in Figur 3 dargestellt ist, zur Darstellung der Information in der Deckschicht 2 zusätzlich vorgesehen sein, dass Lichtstreuzentren, d.h. die Bläschen so im Bereich der inneren Grenzfläche 2' der Deckschicht 2 ausgebildet werden, dass die die Lichtstreuzentren bildenden Bläschen sich durch die Kontrastschicht 4 hindurch bis in die den Aufzeichnungsbereich für die Individualisierung des Datenträgers tragende Schicht, also das Substrat 1, hineinerstrecken. Ferner ist es möglich, zur Darstellung einer Gesamtinformation die Lichtstreuzentren 3, 3' mit Bildpunkten 3" in oder auf dem Substrat 1 zu kombinieren.

Hierdurch wird die Fälschungssicherheit des erfindungsgemäßen Datenträgers weiter verbessert, da zum einen das Abtrennen der Deckschicht 2 vom Substrat 1 erschwert wird und da andererseits die Gesamtinformation beim Abtrennen der Deckschicht irreversibel zerstört wird und auch dann praktisch nicht rekonstruiert werden kann, wenn die Deckschicht nach dem Manipulieren des Aufzeichnungsbereichs auf dem Substrat 1 wieder darauf aufgebracht wird. Insgesamt wird also durch die Ausbildung der Lichtstreuzentren im Verbindungsbereich von Deckschicht 2, Kontrastschicht 4 und Substrat 1 die Fälschungssicherheit des erfindungsgemäßen kartenförmigen Datenträgers deutlich verbessert.

## Patentansprüche

1. Kartenförmiger Datenträger mit mindestens einer transparenten Deckschicht (2), der einen Aufzeichnungsbereich für Information aufweist, wobei in der Deckschicht (2) Lichtstreuzentren (3) entsprechend darzustellender Information vorgesehen sind, die als kleine Hohlräume oder Bläschen (3) ausgebildet sind, **dadurch gekennzeichnet, dass** die Lichtstreuzentren (3) entsprechend der von diesen darzustellenden Information für eine dreidimensionale Darstellung in Dickenrichtung der Deckschicht (2) gegeneinander versetzt sind.

2. Kartenförmiger Datenträger nach Anspruch 1, **dadurch gekennzeichnet, dass** der Durchmesser der Lichtstreuzentren (3) im Bereich von 0,25 mm bis 0,03 mm liegt.

3. Kartenförmiger Datenträger nach einem der vorstehenden Ansprüche, **dadurch gekennzeichnet, dass** die Lichtstreuzentren (3) entsprechend der von diesen darzustellenden Information unterschiedliche Durchmesser aufweisen.

4. Kartenförmiger Datenträger nach einem der vorstehenden Ansprüche, **dadurch gekennzeichnet, dass** der Fläche der Deckschicht (2), die von der Betrachtungsseite der Deckschicht (2) abgewandt ist, eine Kontrastschicht (4) zugeordnet ist, die als diffus reflektierende Schicht oder als Licht absorbierende Schicht ausgebildet ist.

5. Kartenförmiger Datenträger nach Anspruch 4, **dadurch gekennzeichnet, dass** die Kontrastschicht (4) von einem Substrat (1) gebildet ist.

6. Kartenförmiger Datenträger nach einem der vorstehenden Ansprüche, **dadurch gekennzeichnet, dass** die Deckschicht (2) aus Polycarbonat hergestellt ist.

7. Kartenförmiger Datenträger nach einem der vorstehenden Ansprüche, **dadurch gekennzeichnet, dass** eine Anzahl der Lichtstreuzentren (3) in der Deckschicht (2) sich bis in eine den Aufzeichnungsbereich für Information tragende Schicht (1) erstrecken.

8. Kartenförmiger Datenträger nach einem der vorstehenden Ansprüche, **dadurch gekennzeichnet, dass** zusätzlich zu den Lichtstreuzentren (3) in der Deckschicht (2) in oder auf einer den Aufzeichnungsbereich für Information tragenden Schicht (1) Bildpunkte vorgesehen sind, die gemeinsam mit den Lichtstreuzentren (3) in der Deckschicht (2) eine Gesamtinformation darstellen.

9. Verfahren zum Aufzeichnen von Information auf einen kartenförmigen Datenträger, der mindestens eine transparente Deckschicht (2) aufweist, wobei in einem Aufzeichnungsbereich in der Deckschicht (2) kleine Hohlräume oder Bläschen (3), deren Durchmesser im Bereich von 0,25 mm bis 0,03 mm liegt, als Lichtstreuzentren (3) entsprechend darzustellender Information mittels Strahlung, insbesondere mittels Licht, vorzugsweise mittels Laserstrahlung erzeugt werden, die entsprechend der von diesen darzustellenden Information für eine dreidimensionale Darstellung in Dickenrichtung der Deckschicht (2) gegeneinander versetzt ausgebildet werden.

10. Verfahren nach Anspruch 9, **dadurch gekennzeichnet, dass** die Lichtstreuzentren (3) entsprechend der von diesen darzustellenden Information mit unterschiedlichen Durchmesser hergestellt werden.

11. Verfahren nach Anspruch 9 oder 10, **dadurch gekennzeichnet, dass** eine Anzahl der Lichtstreuzentren (3) so im Bereich einer inneren Oberfläche (2') der Deckschicht (2) mittels Strahlung erzeugt werden, dass sich diese Lichtstreuzentren bis in eine den Aufzeichnungsbereich für Information tragende Schicht (1) erstrecken.

12. Verfahren nach einem der Ansprüche 9 bis 11. **dadurch gekennzeichnet, dass** zusätzlich zu den Lichtstreuzentren (3) in der Deckschicht (2) in oder auf einer den Aufzeichnungsbereich für Information tragenden Schicht (1) mittels Strahlung, insbesondere mittels Licht, vorzugsweise mittels Laserstrahlung, Bildpunkte erzeugt werden, die gemeinsam mit den Lichtstreuzentren (3) in der Deckschicht (2) eine Gesamtinformation darstellen.

13. Verfahren nach einem der Ansprüche 9 bis 12, **dadurch gekennzeichnet, dass** die Deckschicht (2) aus Polycarbonat besteht.

## Claims

1. Card-like data storage medium comprising at least one transparent cover layer (2) having a recording region for information, with light scatter centres (3) being provided in the cover layer (2) in accordance with information to be represented, which light scatter centres (3) are in the form of small cavities or bubbles (3), **characterized in that** the light scatter centres (3) are offset with respect to one another in the thickness direction of the cover layer (2) in accordance with the information to be represented by these light scatter centres (3) for a three-dimensional representation.

2. Card-like data storage medium according to Claim 1, **characterized in that** the diameter of the light scatter centres (3) is in the range from 0.25 mm to 0.03 mm.

3. Card-like data storage medium according to one of the preceding claims, **characterized in that** the light scatter centres (3) have differing diameters in accordance with the information to be represented by these light scatter centres (3).

4. Card-like data storage medium according to one of the preceding claims, **characterized in that** the surface of the cover layer (2) which is remote from the viewing side of the cover layer (2) is assigned a contrast layer (4) which is in the form of a diffusely reflecting layer or as a light-absorbing layer.

5. Card-like data storage medium according to Claim 4, **characterized in that** the contrast layer (4) is formed by a substrate (1).

6. Card-like data storage medium according to one of the preceding claims, **characterized in that** the cover layer (2) is made of polycarbonate.

7. Card-like data storage medium according to one of the preceding claims, **characterized in that** a number of the light scatter centres (3) in the cover layer (2) extend into a layer (1), which carries the recording region for information.

8. Card-like data storage medium according to one of the preceding claims, **characterized in that** in addition to the light scatter centres (3) in the cover layer (2) pixels, which together with the light scatter centres (3) in the cover layer (2) represent overall information, are provided in or on a layer (1), which carries the recording region for information.

9. Method for recording information on a card-like storage medium comprising at least one transparent cover layer (2), wherein small cavities or bubbles (3) with a diameter in the range from 0.25 mm to 0.03 mm as light scatter centres (3) are produced in a recording region in the cover layer (2) in accordance with information to be represented by means of radiation, in particular by means of light, preferably by means of laser radiation, which light scatter centres (3) are formed such that they are offset with respect to one another in the thickness direction of the cover layer (2) in accordance with the information to be represented by these light scatter centres (3) for a three-dimensional representation.

10. Method according to Claim 9, **characterized in that** the light scatter centres (3) are produced with differing diameters in accordance with the information to be represented by these light scatter centres (3).

11. Method according to Claim 9 or 10, **characterized in that** a number of the light scatter centres (3) are produced in the region of an inner surface (2') of the cover layer (2) by means of radiation such that these light scatter centres extend into a layer (1), which carries the recording region for information.

12. Method according to one of Claims 9 to 11, **characterized in that** in addition to the light scatter centres (3) in the cover layer (2) pixels, which together with the light scatter centres (3) in the cover layer (2) represent overall information, are produced in or on a layer (1), which carries the recording region for information, by means of radiation, in particular by means of light, preferably by means of laser radiation.

13. Method according to one of Claims 9 to 12, **characterized in that** the cover layer (2) is made of polycarbonate.

## Revendications

1. Support de données en forme de carte avec au moins une couche de couverture transparente (2), qui comprend une zone d'enregistrement pour des informations, dans lequel des centres de diffusion de lumière (3) sont prévus dans la couche de couverture (2) en correspondance d'informations à représenter, ces centres étant réalisés sous forme de petites cavités ou de petites bulles (3), **caractérisé en ce que** les centres de diffusion de lumière (3) sont décalés les uns par rapport aux autres dans la direction de l'épaisseur de la couche de couverture (2) en correspondance des informations que ceux-ci doivent représenter pour une représentation tridimensionnelle.

2. Support de données en forme de carte selon la revendication 1, **caractérisé en ce que** le diamètre des centres de diffusion de lumière (3) est dans la plage de 0,25 mm à 0,03 mm.

3. Support de données en forme de carte selon l'une des revendications précédentes, **caractérisé en ce que** les centres de diffusion de lumière (3) présentent des diamètres différents en correspondance des informations que ceux-ci doivent représenter.

4. Support de données en forme de carte selon l'une des revendications précédentes, **caractérisé en ce qu'**à la surface de la couche de couverture (2) qui est détournée du côté d'observation de la couche de couverture (2) est associée une couche de contraste (4) qui est réalisée sous forme de couche de réflexion diffuse ou sous forme de couche qui absorbe la lumière.

5. Support de données en forme de carte selon la revendication 4, **caractérisé en ce que** la couche de contraste (4) est formée par un substrat (1).

6. Support de données en forme de carte selon l'une des revendications précédentes, **caractérisé en ce que** la couche de couverture (2) est réalisée en polycarbonate.

7. Support de données en forme de carte selon l'une des revendications précédentes, **caractérisé en ce qu'**un certain nombre des centres de diffusion de lumière (3) dans la couche de couverture (2) s'étendent jusque dans une couche (1) porteuse de la zone d'enregistrement pour des informations.

8. Support de données en forme de carte selon l'une des revendications précédentes, **caractérisé en ce que,** en supplément des centres de diffusion de lumière (3) dans la couche de couverture (2), des points images sont prévus dans ou sur une couche (1) porteuse de la zone d'enregistrement pour des informations, ces points images représentant une information globale conjointement avec les centres de diffusion de lumière (3) dans la couche de couverture (2).

9. Procédé pour enregistrer des informations sur un support de données en forme de carte qui présente au moins une couche de couverture transparente (2), dans lequel on génère, dans une zone d'enregistrement dans la couche de couverture (2), des petites cavités ou des petites bulles (3), dans le diamètre est situé dans la plage de 0,25 mm à 0,03 mm, à titre de centres de diffusion de lumière (3) en correspondance des informations à représenter, au moyen d'un rayonnement, en particulier au moyen de lumière et de préférence au moyen d'un rayonnement laser, ces centres de diffusion de lumière étant réalisés en décalage les uns par rapport aux autres en direction de l'épaisseur de la couche de couverture (2), en correspondance des informations à représenter par ces derniers pour une représentation tridimensionnelle.

10. Procédé selon la revendication 9, **caractérisé en ce que** les centres de diffusion de lumière (3) sont réalisés avec des diamètres différents en correspondance des informations à représenter par ceux-ci.

11. Procédé selon la revendication 9 ou 10, **caractérisé en ce qu'**un certain nombre des centres de diffusion de lumière (3) sont engendrés au moyen d'un rayonnement dans la région d'une surface intérieure (2') de la couche de couverture (2) de telle façon que ces centres de diffusion de lumière s'étendent jusque dans une couche (1) qui porte la zone d'enregistrement pour des informations.

12. Procédé selon l'une des revendications 9 à 11, **caractérisé en ce que,** en supplément des centres de diffusion de lumière (3) dans la couche de couverture (2), on génère des points images dans ou sur une couche (1) qui porte la zone d'enregistrement pour des informations, au moyen d'un rayonnement, en particulier au moyen de lumière et de préférence au moyen d'un rayonnement laser, ces points images représentant une information d'ensemble conjointement avec les centres de diffusion de lumière (3) dans la couche de couverture (2).

13. Procédé selon l'une des revendications 9 à 12, **caractérisé en ce que** la couche de couverture (2) est en polycarbonate.
